# EUROPÄISCHE PATENTSCHRIFT

(11) **EP 0 626 063 B1**
(45) Veröffentlichungstag und Bekanntmachung des Hinweises auf die Patenterteilung: **02.05.1997**
(21) Anmeldenummer: 94902721.3
(22) Anmeldetag: 08.12.1993
(51) Int. Cl.: G01F 23/28, G01F 25/00

(54) **MIT MIKROWELLEN ARBEITENDES FÜLLSTANDSMESSGERÄT**
MICROWAVE-OPERATED LEVEL GAUGE
LIMNIMETRE FONCTIONNANT AU MOYEN DE MICRO-ONDES

(30) Priorität: 11.12.1992 DE 4241910
(43) Veröffentlichungstag der Anmeldung: 30.11.1994
(73) Patentinhaber: Endress + Hauser GmbH + Co., 79689 Maulburg (DE)
(72) Erfinder: OTTO, Johanngeorg, D-79688 Hausen im Wiesental (DE); BURGER, Stefan, D-79108 Freiburg im Breisgau (DE); GERST, Peter, D-79576 Weil am Rhein (DE)
(74) Vertreter: Leiser, Gottfried, Dipl.-Ing.
(86) Internationale Anmeldenummer: EP9303458
(87) Internationale Veröffentlichungsnummer: WO9414037

(56) Entgegenhaltungen:
- EP-A- 0 416 267
- WO-A-90/09599
- FR-A- 2 385 085
- US-A- 3 398 578
- US-A- 3 474 337
- ADVANCES IN INSTRUMENTATION AND CONTROL PART 2 Bd. 47, Nr. 2 , 1992 , RESEARCH TRIANGLE PARK US Seiten 1137 - 1140 XP328947 O.EDVARDSSON 'Calibration and Accuracy of Radar Level Gauges'

## Beschreibung

Die Erfindung betrifft ein mit Mikrowellen arbeitendes Füllstandsmeßgerät mit einer Antenne zur Aussendung von Sendewellen zur Oberfläche eines Füllguts, dessen Füllstand gemessen werden soll, und zum Empfang der an der Oberfläche reflektierten Echowellen, und mit einer Empfangs- und Auswerteschaltung, die aus den von der Antenne empfangenen Echowellen eine die Echoamplituden als Funktion der Entfernung darstellende Echofunktion bildet und aus der Echofunktion die Laufzeit der Mikrowellen von der Antenne zur Füllgut-Oberfläche ermittelt und daraus den Abstand der Füllgut-Oberfläche von der Antenne bestimmt.

Zur Füllstandsmessung mit Mikrowellen können alle bekannten Verfahren angewendet werden, die es ermöglichen, verhältnismäßig kurze Entfernungen mittels reflektierter Mikrowellen zu messen. Die bekanntesten Beispiele sind das Pulsradar und das Frequenzmodulations-Dauerstrichradar (FMCW-Radar). Beim Pulsradar werden periodisch kurze Mikrowellen-Sendeimpulse ausgesendet, die von dem zu messenden Objekt reflektiert und nach einer abstandsabhängigen Laufzeit wieder empfangen werden. Die empfangene Signalamplitude über der Zeit stellt die Echofunktion dar. Jeder Wert dieser Echofunktion entspricht der Amplitude eines in einem bestimmten Abstand von der Antenne reflektierten Echos. Bei dem FMCW-Verfahren wird eine kontinuierliche Mikrowelle ausgesendet, die periodisch linear frequenzmoduliert ist, beispielsweise nach einer Sägezahnfunktion. Die Frequenz jedes empfangenen Echosignals weist daher gegenüber der Augenblicksfrequenz, die das Sendesignal im Zeitpunkt des Empfangs hat, eine Frequenzdifferenz auf, die von der Laufzeit des Echosignals abhängt. Die Frequenzdifferenz zwischen Sendesignal und Empfangssignal, die durch Mischung beider Signale und Auswertung des Fourierspektrums des Mischsignals gewonnen werde kann, entspricht somit dem Abstand der reflektierenden Fläche von der Antenne, und die Höhe der Frequenzkennlinie entspricht der Größe der Echoamplitude. Dieses Fourierspektrum stellt daher in diesem Fall die Echofunktion dar.

Ein besonderes Problem bei der Füllstandsmessung mit Mikrowellen besteht darin, daß sich an der Antenne ein Ansatz von Füllgut bilden kann. Diese Gefahr besteht besonders bei staub- oder pulverförmigen Füllgütern, insbesondere wenn die Antenne feucht wird, sowie bei klebrigen und zähflüssigen Füllgütern. Mikrowellenantennen vertragen zwar ein gewisses Maß an Verschmutzung, versagen aber, wenn die Schmutz schicht zu dick wird. In diesem Fall wird das Radarsignal im Bereich der Antenne völlig absorbiert, so daß kein Nutzecho mehr feststellbar ist. Mit herkömmlichen Verfahren kann dann nicht mehr unterschieden werden, ob kein Reflektor im Strahlengang vorhanden ist, ob eine starke Dämpfung im Strahlengang außerhalb der Antenne (etwa Schaum auf dem Füllgut) vorhanden ist, oder ob die Antenne durch Ansatzbildung zugesetzt ist.

Aufgabe der Erfindung ist die Schaffung eines mit Mikrowellen arbeitenden Füllstandsmeßgeräts der eingangs angegebenen Art, das die Erkennung von Ansatzbildungen an der Antenne sowie weiterer Störungen, wie z. B. einer Beschädigung oder des Verlustes der Antenne, ermöglicht.

Zur Lösung dieser Aufgabe enthält das Füllstandsmeßgerät nach der Erfindung eine Anordnung zum Vergleich eines von einer Referenz-Reflexionsstelle im Nahbereich der Antenne stammenden Abschnitts der Echofunktion mit einem vorgegebenen Schwellwert und zur Erzeugung eines das Über- bzw. Unterschreiten des Schwellwertes anzeigenden Signals.

Die Erfindung beruht auf der Erkenntnis, daß sich der von Reflexionen des Nahbereichs der Antenne stammende Abschnitt der Echofunktion in charakteristischer Weise verändert, wenn die Antenne mit einem Ansatz von Füllgut behaftet ist. Solche Reflexionen können insbesondere von der Antenne selbst stammen, wenn diese beispielsweise als Hornantenne ausgebildet ist. Zwar ist man bestrebt, durch eine möglichst gute Anpassung der Antenne Impedanzsprünge zu vermeiden, damit keine störenden Nahreflexionen auftreten, die das Nutzsignal überdecken würden, doch gibt es in der Praxis etwa bei einer Hornantenne im Bereich der Antenneneinkopplung und des Horns innere Reflexionen. Die bei dem erfindungsgemäßen Füllstandsmeßgerät angewendete Referenz-Reflexionsstelle soll eine möglichst ausgeprägte, gut reproduzierbare Referenz-Reflexion verursachen, die in der Echofunktion deutlich von der durch die Antenneneinkopplung verursachten Reflexion unterscheidbar ist. Wenn eine solche Referenz-Reflexionsstelle nicht bereits vorhanden ist, wird gemäß einer bevorzugten Ausgestaltung der Erfindung ein Referenz-Reflektor in einem definierten Abstand von der Antenneneinkopplung angebracht. Der Schwellwert, mit dem der von der Referenz-Reflexionsstelle stammende Abschnitt der Echofunktion verglichen wird, wird so eingestellt, daß dieser Abschnitt der Echofunktion den Schwellwert übersteigt, wenn keine oder nur geringe Ansatzbildung an der Antenne vorhanden ist, daß aber dieser Abschnitt unter dem Schwellwert liegt, wenn die Ansatzbildung an der Antenne ein bestimmtes Ausmaß übersteigt. Das das Über- bzw. Unterschreiten des Schwellwerts anzeigende Signal läßt daher erkennen, ob das Füllstandsmeßgerät einwandfrei arbeitet oder ob die Messung durch Ansatzbildung an der Antenne gestört ist.

Vorteilhafte Ausgestaltungen und Weiterbildungen der Erfindung sind in den Unteransprüchen gekennzeichnet.

Weitere Merkmale und Vorteile der Erfindung ergeben sich aus der folgenden Beschreibung eines Ausführungsbeispiels an Hand der Zeichnungen. In den Zeichnungen zeigen:
- Fig. 1: das Prinzip eines mit Mikrowellen arbeitenden Füllstandsmeßgeräts,
- Fig. 2: das Blockschaltbild eines Füllstandsmeßgeräts mit Einrichtungen zur Erkennung einer Ansatzbildung an der Antenne und weiterer Störungen,
- Fig. 3: die Echofunktion einer herkömmlichen Antenne, wenn keine Ansatzbildung an der Antenne besteht,
- Fig. 4: die Echofunktion der gleichen Antenne wie in Fig. 3 bei Bestehen einer Ansatzbildung,
- Fig. 5: die Echofunktion einer mit einem Referenz-Reflektor ausgestatteten Antenne, wenn keine Ansatzbildung an der Antenne besteht,
- Fig. 6: die Echofunktion der gleichen Antenne wie in Fig. 5 bei Bestehen einer Ansatzbildung und
- Fig. 7: Diagramme zur Erläuterung der Funktionsweise des Füllstandsmeßgeräts von Fig. 2.

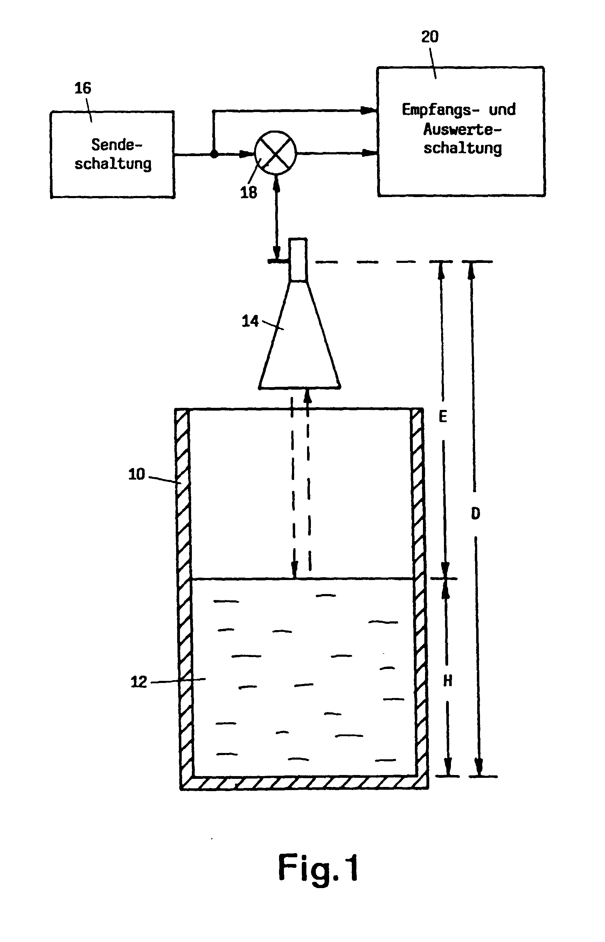

Fig. 1 der Zeichnung zeigt einen Behälter 10, der bis zu einer Höhe H mit einem Füllgut 12 gefüllt ist. Zur Messung des Füllstands H ist oberhalb des Behälters 10 eine Antenne 14 angebracht, mit der eine elektromagnetische Welle zur Oberfläche des Füllguts 12 gesendet und die an dieser Oberfläche reflektierte Echowelle empfangen werden kann. Die ausgesendete elektromagnetische Welle wird durch eine Sendeschaltung 16 erzeugt, die über eine Sende-Empfangsweiche 18 mit der Antenne 14 verbunden ist. Die von der Antenne 14 empfangene Echowelle wird über die Sende-Empfangs-Weiche 18 einer Empfangs- und Auswerteschaltung 20 zugeführt, die aus dem der Antenne 14 von der Sendeschaltung 16 zugeführten Sendesignal und dem von der Antenne 14 gelieferten Empfangssignal die Entfernung E zwischen der Antenne 14 und der Oberfläche des Füllguts 12 ermittelt. Da der Abstand D der Antenne 14 vom Boden des Behälters 10 bekannt ist, ergibt die Differenz zwischen diesem Abstand D und der gemessenen Entfernung E den gesuchten Füllstand H.

Da die zu messenden Entfernungen im Verhältnis zu der Ausbreitungsgeschwindigkeit der elektromagnetischen Wellen sehr klein sind, muß zur Erzielung einer ausreichenden Meßgenauigkeit mit sehr kurzen Wellen gearbeitet werden, die im Mikrowellenbereich liegen. Die Antenne 14 ist natürlich für die Aussendung und den Empfang von so kurzen Wellen ausgebildet; sie ist beispielsweise mit einem Hornstrahler ausgestattet, wie in Fig. 1 angedeutet ist.

Für die Messung der Entfernung E kann jedes aus der Radartechnik bekannte Verfahren angewendet werden. Alle diese Verfahren beruhen darauf, die Laufzeit der elektromagnetischen Wellen von der Antenne zur reflektierenden Oberfläche und zurück zur Antenne zu messen. Da die Ausbreitungsgeschwindigkeit der elektromagnetischen Wellen bekannt ist, kann aus der gemessenen Laufzeit die zurückgelegte Strecke berechnet werden. Da außer dem Nutzecho, das an der zu erfassenden Oberfläche reflektiert wird, auch Störechos auftreten können, wird üblicherweise das gesamte Empfangssignal in eine Echofunktion umgesetzt, die die Intensitätsverteilung des Empfangssignals als Funktion der Entfernung darstellt. Aus dieser Echofunktion wird das Nutzecho ermittelt und dessen Laufzeit festgestellt.

Ein bekanntes Radarverfahren ist das Pulsradar, bei dem periodisch kurze Sendeimpulse ausgesendet werden und in einer sich an jede Aussendung eines Sendeimpulses anschließenden Empfangsphase die Echosignale mit der Frequenz des Sendeimpulses erfaßt werden. In diesem Fall stellt die im Verlauf jeder Empfangsphase empfangene Signalamplitude über der Zeit unmittelbar die Echofunktion dar. Jeder Wert dieser Echofunktion entspricht der Amplitude eines in einem bestimmten Abstand von der Antenne reflektierten Echos. Die Lage des Nutzechos in der Echofunktion zeigt daher unmittelbar die zu messende Entfernung an.

Die direkte Messung der Laufzeit wird bei dem Frequenzmodulations-Dauerstrichverfahren (FMCW-Verfahren) vermieden. Bei diesem Verfahren wird eine kontinuierliche Mikrowelle ausgesendet, die periodisch linear frequenzmoduliert ist, beispielsweise nach einer Sägezahnfunktion. Die Frequenz jedes empfangenen Echosignals weist daher gegenüber der Augenblicksfrequenz, die das Sendesignal im Zeitpunkt des Empfangs hat, eine Frequenzdifferenz auf, die von der Laufzeit des Echosignals abhängt. Die Frequenzdifferenz zwischen Sendesignal und Empfangssignal, die durch Mischung beider Signale und Auswertung des Fourierspektrums des Mischsignals gewonnen werden kann, entspricht somit dem Abstand der reflektierenden Fläche von der Antenne, und die Höhe der Frequenzkennlinie entspricht der Größe der Echoamplitude. Dieses Fourierspektrum stellt daher in diesem Fall die Echofunktion dar.

Die Antenne dient zur Einkopplung in den Prozeß, wobei durch eine möglichst gute Anpassung Impedanzsprünge vermieden werden sollen, damit keine störenden Nahreflexionen auftreten, die das Nutzsignal überdecken würden. Trotzdem gibt es in der Praxis etwa bei einem Hornstrahler im Bereich der Antenneneinkopplung und des Horns innere Reflexionen.

Ein besonderes Problem bei der Füllstandsmessung mit Mikrowellen besteht darin, daß sich an der Antenne ein Ansatz von Füllgut bilden kann. Diese Gefahr besteht besonders bei staub- oder pulverförmigen Füllgütern, insbesondere wenn die Antenne feucht wird, sowie bei klebrigen und zähflüssigen Füllgütern. Mikrowellenantennen vertragen zwar ein gewisses Maß an Verschmutzung, versagen aber, wenn die Schmutzschicht zu dick wird. In diesem Fall wird das Radarsignal im Bereich der Antenne völlig absorbiert, so daß kein Nutzecho mehr feststellbar ist. Mit herkömmlichen Verfahren kann dann nicht mehr unterschieden werden, ob kein Reflektor im Strahlengang vorhanden ist, ob eine starke Dämpfung im Strahlengang außerhalb der Antenne (etwa Schaum auf dem Füllgut) vorhanden ist, oder ob die Antenne durch Ansatzbildung zugesetzt ist.

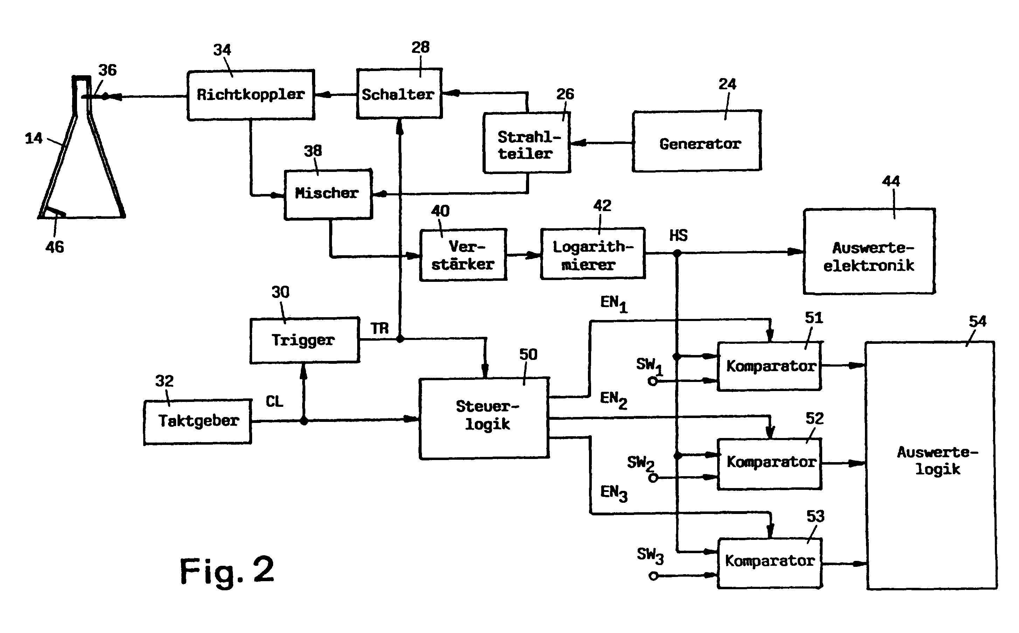

Fig. 2 zeigt das Blockschaltbild der Sendeschaltung und der Empfangs- und Auswerteschaltung eines nach dem Pulsradarverfahren arbeitenden Füllstandsmeßgeräts, bei dem zusätzlich Maßnahmen getroffen sind, um Ansatzbildungen an der Antenne sowie gegebenenfalls weitere Störungen zu erkennen.

In Fig. 2 ist wieder schematisch die als Hornstrahler ausgebildetet Antenne 14 dargestellt. Ein Generator 24 erzeugt eine kontinuierliche Höchstfrequenzschwingung mit der Frequenz der auszusendenden Mikrowelle, die über einen Strahlteiler 26 einem Schalter 28 zugeführt wird. Der Schalter 28 wird durch ein Triggersignal TR, das von einem Trigger 30 auf Grund eines von einem Taktgeber 32 gelieferten Taktsignals CL erzeugt wird, periodisch betätigt. Der Ausgang des Schalters 28 ist über einen Richtkoppler 34, der die Rolle der Sende-Empfangs-Weiche von Fig. 1 spielt, mit dem Einkoppelstift 36 der Antenne 14 verbunden. Bei jedem kurzzeitigen Schließen des Schalters 28 wird ein kurzer Sendeimpuls von der Antenne 14 ausgesendet. Die auf Grund des Sendeimpulses von der Antenne 14 empfangenen Echosignale werden über den Richtkoppler 34 dem einen Eingang eines Mischers 38 zugeführt, der an seinem zweiten Eingang ein durch den Strahlteiler 26 vom Ausgangsignal des Generators 24 abgezweigtes Signal empfängt. Das durch die Mischung der beiden Signale im Mischer 38 erhaltene Hüllkurvensignal wird in einem Verstärker 40 verstärkt, dem ein Logarithmierer 42 nachgeschaltet ist, der die laufzeitabhängige Dämpfung der Echosignale kompensiert. Das am Ausgang des Logarithmierers 42 abgegebene verstärkte und logarithmierte Hüllkurvensignal HS, das die Echofunktion darstellt, wird einer Auswerteelektronik 44 zugeführt, die daraus die Laufzeit des Nutzechos und die gesuchte Entfernung E ermittelt.

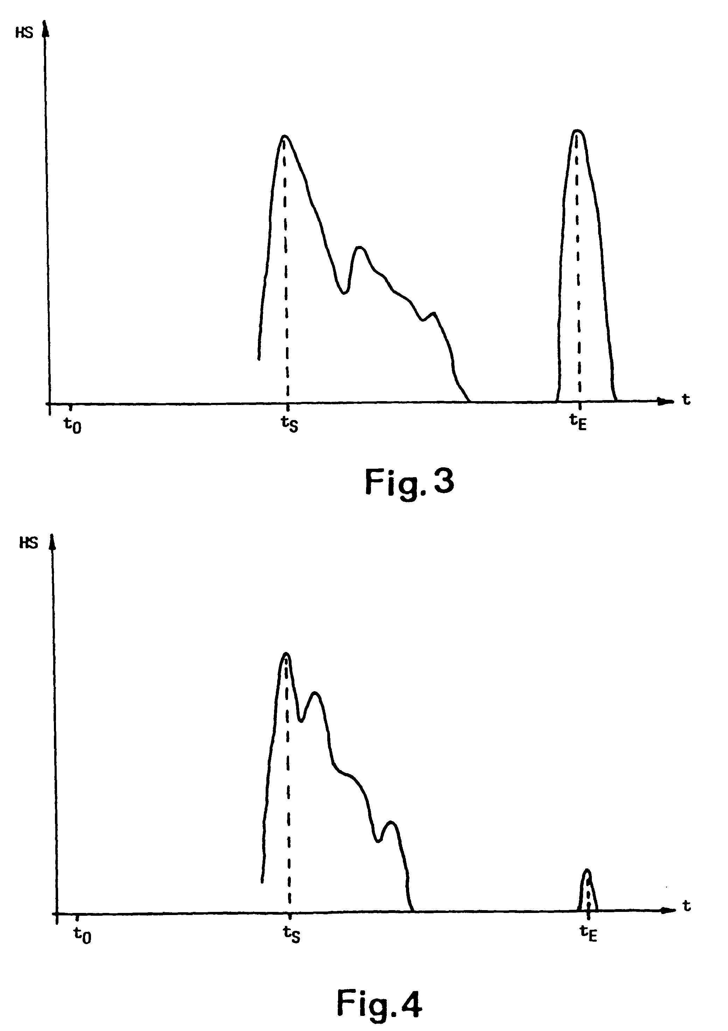

Der bisher beschriebene Teil der Schaltung von Fig. 2 entspricht einem herkömmlichen Aufbau eines mit reflektierten elektromagnetischen Wellen arbeitenden Entfernungsmeßgeräts, der dem Fachmann bekannt ist. Das Diagramm von Fig. 3 zeigt die durch das Hüllkurvensignal HS dargestellte Echofunktion eines solchen herkömmlichen Entfernungsmeßgeräts für den Fall, daß keine Ansatzbildung oder sonstige Störung vorliegt, und das Diagramm von Fig. 4 zeigt die entsprechende Echofunktion für den Fall einer starken Ansatzbildung an der Antenne. Der Zeitpunkt t₀ entspricht dem Beginn des vom Trigger 30 zum Schalter 28 gelieferten Triggerimpulses, der das Schließen des Schalters 28 auslöst. Im Zeitpunkt t_{S} kommt der vom Schalter 28 erzeugte Sendeimpuls am Einkoppelstift 36 der Antenne 14 an; dies verursacht eine ausgeprägte Spitze in der Echofunktion. Daran schließen sich Echoamplituden abnehmender Amplitude an, die von Reflexionen im Bereich des Hornstrahlers stammen. Im Zeitpunkt t_{E} enthält das Diagramm von Fig. 4 eine weitere ausgeprägte Spitze, die dem Empfang des Nutzechos entspricht.

Das Diagramm von Fig. 4 läßt erkennen, daß im Falle einer starken Ansatzbildung an der Antenne die Form der Echofunktion im Bereich der Antenne in charakteristischer Weise verändert ist, da auf Grund der Absorption durch den Ansatz aus diesem Bereich weniger Energie reflektiert wird. Ferner ist in der Echofunktion von Fig. 4 die vom Nutzecho stammende Echoamplitude so stark geschwächt, daß sie nicht mehr auswertbar ist.

Die Erkennung von Ansatzbildungen an der Antenne 14 beruht bei dem Entfernungsmeßgerät von Fig. 2 auf der Auswertung der charakteristischen Änderungen des Teils der Echofunktion, der von Reflexionen aus dem Antennenbereich stammt. Dies ist bei Echofunktionen mit der in Fig. 3 und 4 dargestellten Form durchaus möglich. Günstiger ist es jedoch, wenn im Antennenbereich eine Referenz-Reflexionsstelle vorhanden ist, die ein Referenzecho mit ausgeprägter Reflexionsspitze erzeugt. In manchen Fällen kann eine solche Referenz-Reflexionsstelle durch ein bereits vorhandenes Antennenteil gebildet sein, beispielsweise durch die Kante des Hornstrahlers. Wenn keine solche Referenz-Reflexionsstelle vorhanden ist, wird vorzugsweise ein besonderer Referenz-Reflektor im Antennenbereich angebracht. Fig. 2 zeigt einen solchen Referenz-Reflektor 46, der an der Kante des Hornstrahlers der Antenne 14 so angebracht ist, daß er in das Innere des Hornstrahlers ragt. Der Referenz-Reflektor kann ein angeschraubtes Blechteil, ein Drahtbügel, eine Nut oder Sicke etc. sein. Die Anordnung nahe der Antennenkante ist vorteilhaft, um eine deutliche Trennung zwischen der von der Einkopplung verursachten Spitze und der vom Referenz-Reflektor verursachten Spitze in der Echofunktion zu erhalten. Gegebenenfalls kann der Referenz-Reflektor auch in geringem Abstand vor der Antenne angebracht werden.

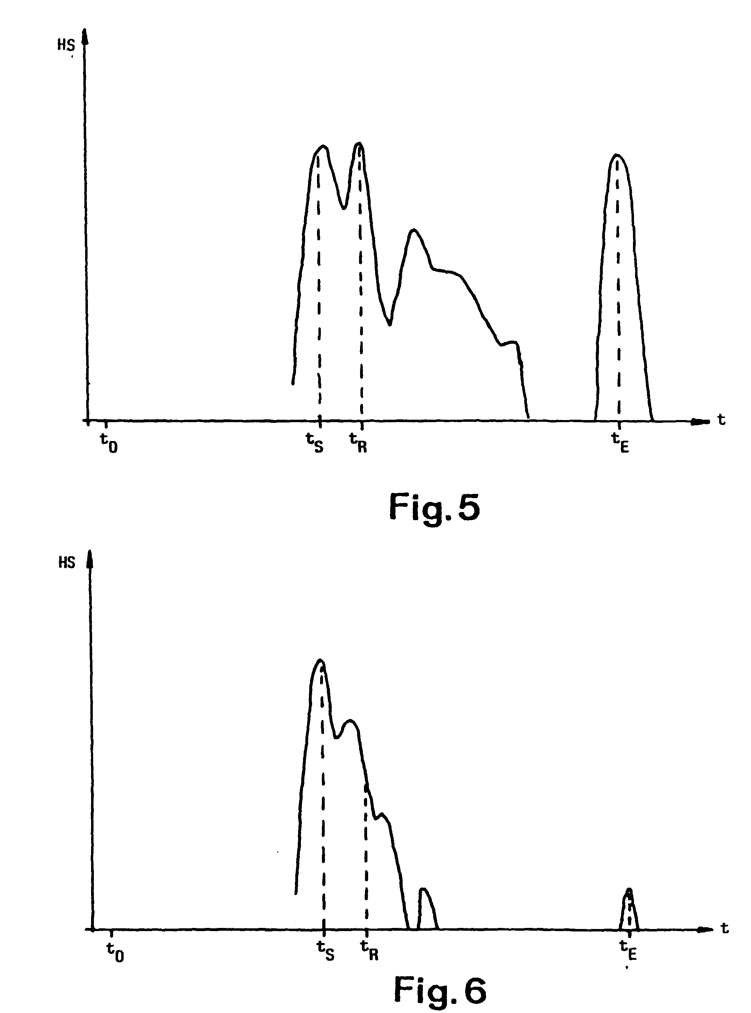

Die Diagramme von Fig. 5 und 6 zeigen analog zu den Diagrammen von Fig. 3 und 4 die Echofunktionen einer mit einem solchen zusätzlichen Referenz-Reflektor ausgestatteten Antenne ohne bzw. mit Ansatzbildung. Die im Diagramm von Fig. 5 dargestellte Echofunktion enthält zusätzlich zu den von der Einkopplung im Zeitpunkt t_{S} und vom Nutzecho im Zeitpunkt t_{E} verursachten Spitzen die vom Referenz-Reflektor 46 im Zeitpunkt t_{R} verursachte Spitze. Die Echofunktion von Fig. 6 läßt erkennen, daß die durch die Ansatzbildung verursachten charakteristischen Änderungen insbesondere im Bereich der Referenz-Spitze sehr ausgeprägt sind und eine deutliche Unterscheidung der beiden Zustände erlauben.

Zur Auswertung der durch die Ansatzbildung verursachten charakteristischen Änderungen der Echofunktion enthält die Schaltung von Fig. 2 eine Steuerlogik 50 und einen Amplituden-Komparator 51, der an seinem ersten Eingang das Hüllkurvensignal HS vom Ausgang des Logarithmierers 42 und an seinem zweiten Eingang ein Schwellwertsignal SW₁ empfängt. Der Amplituden-Komparator 51 ist in herkömmlicher Weise so ausgebildet, daß sein Ausgangssignal den einen oder den anderen von zwei Signalwerten in Abhängigkeit davon annimmt, ob das dem ersten Eingang zugeführte Hüllkurvensignal HS größer oder kleiner als das dem zweiten Eingang zugeführten Schwellwertsignal SW₁ ist. Der Amplituden-Komparator 51 hat ferner einen Steuereingang, der ein Freigabesignal EN₁ von einem Ausgang der Steuerlogik 50 empfängt. Die Steuerlogik 50 empfängt das vom Taktgeber 32 gelieferte Taktsignal CL und das Ausgangssignal TR des Triggers 30, das die Sendezeitpunkte bestimmt; sie erzeugt auf Grund dieser beiden Signale das Freigabesignal EN₁ so, daß der Amplituden-Komparator 51 nur während eines bestimmten Zeitfensters nach der Aussendung eines Sendeimpulses für die Durchführung des Amplitudenvergleichs freigegeben wird.

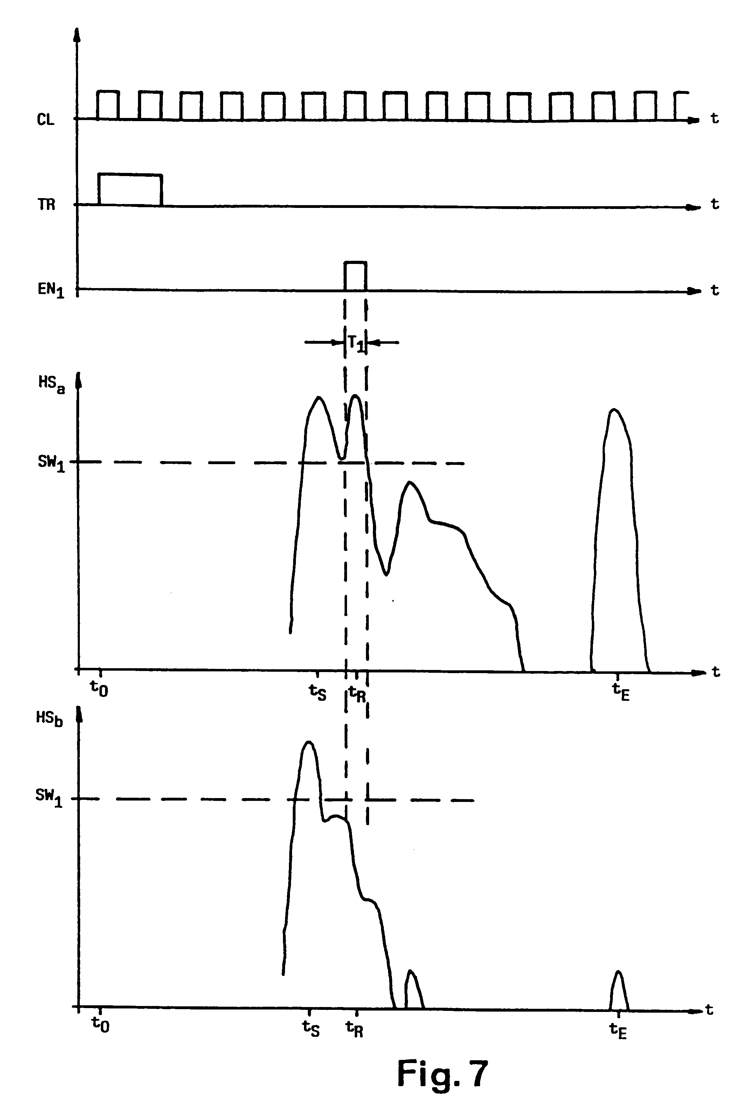

Die Funktion des Komparators 51 und der Steuerlogik 50 ist aus den Diagrammen von Fig. 7 ersichtlich. Diese zeigen den zeitlichen Verlauf der Hüllkurvensignale HSₐ und HS_{b}, die den Echofunktionen von Fig. 5 bzw. Fig. 6 entsprechen, sowie das vom Taktgeber 32 gelieferte Taktsignal CL, das vom Trigger 30 gelieferte Triggersignal TR und das von der Steuerlogik 50 erzeugte Freigabesignal EN₁. In die Diagramme der beiden Hüllkurvensignale HSₐ und HS_{b} ist der Schwellwert SW₁ des Komparators 51 eingezeichnet. Die Steuerlogik 50 erzeugt das Freigabesignal EN₁ in einem durch das Taktsignal CL genau bestimmten Zeitabstand nach dem Beginn des Triggersignals TR, so daß das durch das Freigabesignal EN₁ bestimmte Zeitfenster T₁ dem Zeitintervall entspricht, in dem das vom Referenz-Reflektor 46 verursachte Referenzecho im Hüllkurvensignal erscheint. In diesem Zeitfenster vergleicht der Komparator 51 das Hüllkurvensignal HS mit dem Schwellwert SW₁. Es ist zu erkennen, das das der Antenne ohne Ansatzbildung entsprechende Hüllkurvensignal HSa im Zeitfenster T1 den Schwellwert SW₁ übersteigt; das Ausgangssignal des Komparators 51 nimmt daher einen ersten Signalwert an, beispielsweise den niedrigen Signalwert, der anzeigt, daß keine störende Ansatzbildung an der Antenne 14 besteht. Dagegen bleibt das der Antenne mit Ansatzbildung entsprechende Hüllkurvensignal HS_{b} im Zeitfenster T₁ unter dem Schwellwert SW₁, so daß das Ausgangssignal des Komparators 51 den zweiten Signalwert, beim gewählten Beispiel den hohen Signalwert, annimmt, der anzeigt, daß an der Antenne eine Ansatzbildung besteht, die die Füllstandsmessung verfälschen oder unmöglich machen kann.

Die zeitliche Lage und die Dauer des Freigabesignals EN₁ sowie die Höhe des Komparator-Schwellwerts SW₁ bilden drei einstellbare Parameter, durch die die Schaltung an unterschiedliche Betriebsbedingungen angepaßt werden kann. Die Wahl der zeitlichen Lage des Freigabesignals ermöglicht insbesondere die Anpassung an unterschiedliche Positionen des Referenz-Reflektors. Die Dauer des Freigabesignals wird so eingestellt, daß das Referenzecho, abhängig von seiner Form, optimal ausgenutzt wird. Die Höhe des Komparator-Schwellwerts wird in Abhängigkeit von dem Grad der Ansatzbildung gewählt, von dem ab eine Störung der Füllstandsmessung zu befürchten ist.

Das Ausgangssignal des Komparators kann in verschiedener Weise verwendet werden. Im einfachsten Fall kann es zur Anzeige der Ansatzbildung oder zur Auslösung eines Alarms dienen, um eine Bedienungsperson zu warnen, die dann die erforderlichen Maßnahmen ergreift. Es kann jedoch auch automatische Maßnahmen auslösen, die trotz der Ansatzbildung eine Fortsetzung der Messung ermöglichen, beispielsweise durch Erhöhung der Sendeleistung und/oder durch Erhöhung der Empfangsverstärkung.

Wie in Fig. 2 dargestellt ist, können zusätzlich zu dem Komparator 50 weitere Komparatoren 52, 53 ... vorgesehen sein, die das Hüllkurvensignal HS mit unterschiedlichen Schwellwerten SW₂, SW₃ ... vergleichen und von der Steuerlogik 50 Freigabesignale EN₂, EN₃ ... empfangen, die gleich oder verschieden sein können. Solche zusätzlichen Komparatoren ermöglichen eine feinere Differenzierung der Überwachung der Ansatzbildung, eine Anzeige des aktuellen Verschmutzungsgrades oder die Überwachung weiterer Störungsursachen. Beispielsweise kann ein Komparator, dessen Schwellwert höher als der in Fig. 7 dargestellte Schwellwert SW₁ eingestellt ist, den Beginn einer Ansatzbildung anzeigen, bevor diese Ansatzbildung die Messung stört oder unmöglich macht. Ein Komparator, dessen Schwellwert noch unter der bei stärkster Ansatzbildung vorliegenden Amplitude des Referenzechos liegt, kann einen Totalausfall des Antennensystems oder der Elektronik anzeigen. Die Ausgangssignale dieser und gegebenenfalls weiterer Komparatoren mit unterschiedlichen Schwellwerten und/oder Zeitfenstern können einer Auswertelogik 54 zugeführt werden, die die Ausgangssignale zur genaueren Bestimmung und feineren Eingrenzung der Fehler und Störungen auswertet.

Die zuvor beschriebene Erkennung einer Ansatzbildung kann in gleicher Weise wie bei dem als Beispiel beschriebenen Pulsradargerät auch bei einem Frequenzmodulations-Dauerstrichradargerät oder bei jedem anderen mit Mikrowellen arbeitenden Entfernungsmeßgerät angewendet werden, das eine Echofunktion der zuvor angegebenen Art liefert.

## Patentansprüche

1. Mit Mikrowellen arbeitendes Füllstandsmeßgerät mit einer Antenne zur Aussendung von Sendewellen zur Oberfläche eines Füllguts, dessen Füllstand gemessen werden soll, und zum Empfang der an der Oberfläche reflektierten Echowellen, und mit einer Empfangs- und Auswerteschaltung, die aus den von der Antenne empfangenen Echowellen eine die Echoamplituden als Funktion der Entfernung darstellende Echofunktion bildet und aus der Echofunktion die Laufzeit der Mikrowellen von der Antenne zur Füllgut-Oberfläche ermittelt und daraus den Abstand der Füllgut-Oberfläche von der Antenne bestimmt, gekennzeichnet durch eine Anordnung zum Vergleich eines von einer Referenz-Reflexionsstelle in der Antenne oder in deren Nahbereich stammenden Abschnitts der Echofunktion mit einem vorgegebenen Schwellwert und zur Erzeugung eines das Über- bzw. Unterschreiten des Schwellwertes anzeigenden Signals.

2. Füllstandsmeßgerät nach Anspruch 1, dadurch gekennzeichnet, daß die Referenz-Reflexionsstelle durch einen Teil der Antenne gebildet ist.

3. Füllstandsmeßgerät nach Anspruch 2, dadurch gekennzeichnet, daß die Antenne einen Hornstrahler aufweist und daß die Referenz-Reflexionsstelle durch die Kante des Hornstrahlers gebildet ist.

4. Füllstandsmeßgerät nach Anspruch 1, dadurch gekennzeichnet, daß die Referenz-Reflexionsstelle durch einen in der Antenne oder in deren Nahbereich angebrachten Referenz-Reflektor gebildet ist.

5. Füllstandsmeßgerät nach Anspruch 4, dadurch gekennzeichnet, daß die Antenne einen Hornstrahler aufweist und daß der Referenz-Reflektor an der Kante des Hornstrahlers angebracht ist.

6. Füllstandsmeßgerät nach einem der vorhergehenden Ansprüche, dadurch gekennzeichnet, daß die Empfangs- und Auswerteschaltung eine Anordnung zur Erzeugung eines die Echofunktion darstellenden Hüllkurvensignals enthält, daß wenigstens ein Komparator vorgesehen ist, der an einem Eingang das Hüllkurvensignal und an seinem anderen Eingang ein Schwellwertsignal empfängt und an seinem Ausgang ein Signal abgibt, das in Abhängigkeit davon, welches seiner Eingangssignale den größeren Wert hat, den einen oder den anderen von zwei Signalwerten annimmt, und daß eine Steuerlogik vorgesehen ist, die zu dem bzw. jedem Komparator ein Freigabesignal liefert, das den Vergleich während eines Zeitfensters zuläßt, in welchem das von der Referenz-Reflexionsstelle stammende Echosignal in der Echofunktion erscheint.

7. Füllstandsmeßgerät nach Anspruch 6, dadurch gekennzeichnet, daß mehrere Komparatoren vorgesehen sind, die unterschiedliche Schwellwertsignale und/oder unterschiedliche Freigabesignale empfangen.

8. Füllstandsmeßgerät nach Anspruch 7, dadurch gekennzeichnet, daß die Ausgänge der Komparatoren mit einer Auswertelogik verbunden sind.

## Claims

1. A level measuring device using microwaves comprising an antenna for sending transmitted waves toward the surface of a material whose level is to be measured, and for the reception of echo waves resulting from reflection at the surface, and a receiving and evaluating circuit adapted to derive from the echo waves received by the antenna an echo function representative of the echo amplitudes as a function of the distance and to determine from the echo function the transit time of the microwaves from the antenna to the surface of the material and therefrom the distance of the surface of the material from the antenna, characterized by an arrangement for comparing a section of the echo function originating from a reference reflection point in the antenna or in the vicinity of the antenna with a predetermined threshold value, and for producing a signal indicating whether the threshold value is exceeded or fallen short of.

2. The level measuring device as claimed in claim 1, characterized in that the reference reflection point is constituted by a part of the antenna.

3. The level measuring device as claimed in claim 2, characterized in that the antenna comprises a horn feeder and in that the reference reflection point is constituted by the edge of the horn feeder.

4. The level measuring device as claimed in claim 1, characterized in that the reference reflection point is constituted by a reference reflector mounted in the antenna or in the vicinity thereof.

5. The level measuring device as claimed in claim 4, characterized in that the antenna comprises a horn feeder and in that the reference reflector is mounted at the edge of the horn feeder.

6. The level measuring device as claimed in any one of the preceding claims, characterized in that the receiving and evaluating circuit comprises an arrangement for producing an envelope signal representing the echo function, in that at least one comparator is provided, which at one input receives the envelope signal and at another input receives a threshold value signal and at its output provides a signal, which dependent on which of its input signals possesses the greater value, assumes the one or the other of two signal values, and in that control logic circuitry is provided which supplies each comparator with an enable signal which permits comparison during a time window, wherein the echo signal stemming from the reference reflection point appears in the echo function.

7. The level measuring device as claimed in claim 6, characterized in that several comparators are provided, which receive different threshold value signals and/or different enable signals.

8. The level measuring device as claimed in claim 7, characterized in that the outputs of the comparators are connected with evaluating logic circuitry.

## Revendications

1. Appareil de mesure de niveau de remplissage fonctionnant avec des micro-ondes, équipé d'une antenne pour la diffusion d'ondes d'émission vers la surface d'un matériau de remplissage dont on doit mesurer le niveau de remplissage, et pour la réception des ondes d'écho réfléchies à la surface, et d'un circuit de réception et d'analyse qui forme une fonction d'écho représentant les amplitudes d'écho en fonction de la distance à partir des ondes d'écho reçues par l'antenne, qui détermine, à partir de la fonction d'écho, le temps de propagation des micro-ondes de l'antenne à la surface du matériau de remplissage et calcule à partir de cette donnée la distance de la surface du matériau de remplissage à l'antenne, caractérisé par un dispositif pour comparer une partie de la fonction d'écho provenant d'un point de réflexion de référence dans l'antenne ou dans sa zone d'action immédiate avec une valeur seuil prédéfinie et pour générer un signal indiquant le dépassement ou le sous-dépassement de la valeur seuil.

2. Appareil de mesure de niveau de remplissage selon la revendication 1, caractérisé en ce que le point de réflexion de référence est formé par une partie de l'antenne.

3. Appareil de mesure de niveau de remplissage selon la revendication 2, caractérisé en ce que l'antenne présente une antenne à cornet et en ce que le point de réflexion de référence est formé par le bord de l'antenne à cornet.

4. Appareil de mesure de niveau de remplissage selon la revendication 1, caractérisé en ce que le point de réflexion de référence est formé par un réflecteur de référence disposé dans l'antenne ou dans sa zone d'action immédiate.

5. Appareil de mesure de niveau de remplissage selon la revendication 4, caractérisé en ce que l'antenne présente une antenne à cornet et en ce que le réflecteur de référence est disposé sur le bord de l'antenne à cornet.

6. Appareil de mesure de niveau de remplissage selon l'une quelconque des revendications précédentes, caractérisé en ce que le circuit de réception et d'analyse comporte un dispositif pour générer un signal d'enveloppante représentant la fonction d'écho, en ce qu'il est prévu au moins un comparateur qui reçoit le signal d'enveloppante à une entrée et un signal de valeur seuil à son autre entrée et émet à sa sortie un signal qui prend l'une ou l'autre des deux valeurs de signal selon que l'un ou l'autre de ses signaux d'entrée a la plus grande valeur, et en ce qu'il est prévu une logique de commande qui fournit respectivement à chaque comparateur un signal de validation qui autorise la comparaison pendant un créneau de temps lors duquel apparaît le signal d'écho provenant du point de réflexion de référence dans le cadre de la fonction d'écho.

7. Appareil de mesure de niveau de remplissage selon la revendication 6, caractérisé en ce qu'il est prévu plusieurs comparateurs qui reçoivent des signaux de valeur seuil différents et/ou des signaux de validation différents.

8. Appareil de mesure de niveau de remplissage selon la revendication 7, caractérisé en ce que les sorties des comparateurs sont reliées à une logique d'analyse.
